Europäisches Patentamt

European Patent Office

Office européen des brevets

(19)

(11) Veröffentlichungsnummer : **0 115 086
B1**

(12) EUROPÄISCHE PATENTSCHRIFT

(45) Veröffentlichungstag der Patentschrift :
02.12.87

(21) Anmeldenummer : 83113243.6

(22) Anmeldetag : 30.12.83

(51) Int. Cl.⁴ : **A 63 H 33/30, B 23 Q 37/00**

(54) Bausatz für Werkzeugmaschinen.

(30) Priorität : 03.01.83 DE 8300040 U

(43) Veröffentlichungstag der Anmeldung :
08.08.84 Patentblatt 84/32

(45) Bekanntmachung des Hinweises auf die Patenterteilung : 02.12.87 Patentblatt 87/49

(84) Benannte Vertragsstaaten :
DE FR GB IT NL SE

(56) Entgegenhaltungen :
CH-A- 103 481
CH-A- 453 172
DE-A- 1 808 208
DE-U- 1 878 356
DE-U- 7 600 116
DE-U- 8 300 040
GB-A- 2 025 282
US-A- 3 316 946
MACHINES AND TOOLING, Band 51, Nr. 8, 1980,
Melton Mowbray O.I. AVERYANOV "Modular designs
of NC machining centres", Seiten 8-11

(73) Patentinhaber : **Maier & Co.
Friedmann-Maier-Strasse 9
A-5400 Hallein (AT)**

(72) Erfinder : **Maleschew, Josef
Stanzingstrasse 13
A-5061 Elsbethen (AT)**

(74) Vertreter : **Patentanwälte Schaumburg & Thoenes
Mauerkircherstrasse 31 Postfach 86 07 48
D-8000 München 80 (DE)**

## Beschreibung

Die Erfindung betrifft einen Bausatz zur Erstellung von Werkzeugmaschinen, umfassend eine Mehrzahl von Bausatzelementen mit mindestens einem länglichen Maschinenbett und einem an dem Maschinenbett in dessen Längsrichtung verstellbaren Spindelstock mit einem Antriebsmotor für die Spindel, wobei die mit dem Maschinenbett verbindbaren Bausatzelemente mittels einer in Bettlängsrichtung verlaufenden Nut-Feder-Führung am Maschinenbett gehalten sind.

Ein derartiger Werkzeugmaschinen-Bausatz ist beispielsweise aus der GB-A-20 25 282 bekannt. Solche Bausätze werden von der Industrie und von Heimwerkern benutzt. Sie sind aufgrund der an sie gestellten Forderungen hinsichtlich Präzision und Leistung aufwendig und teuer in der Herstellung, da sie zur Durchführung verschiedener Funktionen eine größere Anzahl von Spezialteilen erfordern. Ferner ist je nach Art der Maschine und der herzustellenden Produkte sowohl für das Zusammensetzen der Bausatzelemente als auch für die Bedienung der entstandenen Werkzeugmaschine eine mehr oder weniger umfassende und sorgfältige Ausbildung des Bedienungspersonals erforderlich.

Der Erfindung liegt die Aufgabe zugrunde, einen Bausatz der eingangs genannten Art anzugeben, der für Kinder als konstruktives Spielzeug geeignet und demgemäß einfach im Aufbau und preiswert in der Herstellung ist.

Der Bausatz soll mit einer geringen Anzahl von Einzelteilen eine möglichst große Vielfalt von einfach und gefahrlos zu bedienenden Werkzeugmaschinen ermöglichen.

Diese Aufgabe wird erfindungsgemäß dadurch gelöst, daß das Maschinenbett senkrecht zu seiner Längsrichtung in mindestens zwei Abschnitte unterteilt ist, die senkrecht zu ihrer Längsrichtung gleichen Querschnitt besitzen und die an zwei einander gegenüberliegenden Längsseiten und an ihren Stirnflächen jeweils eine Nut bzw. eine Feder gleichen Querschnitts aufweisen derart, daß die beiden Abschnitte des Maschinenbettes wahlweise in Flucht miteinander verbindbar sind und daß die Abschnitte neben ihrer in Längsrichtung verlaufenden Nut oder Feder eine Zahnleiste aufweisen, deren Zähne nicht über die Oberfläche der Abschnitte hinausragen.

Die erfindungsgemäß vorgeschlagene Ausbildung des Maschinenbettes bietet die Möglichkeit, durch einfaches Umsetzen der Abschnitte des Maschinenbettes und Austauschen von Bausatzelementen eine Mehrzahl von Werkzeugmaschinen aufzubauen, wie dies weiter unten anhand von Ausführungsbeispielen noch erläutert wird. Zwar sind aus der DE-A-18 08 208 quaderförmige Bausteine zur Erstellung von Modellbauten oder Modellmauerwerken bekannt, die sowohl an ihren Stirnseiten als auch an zwei gegenüberliegenden Längsseiten jeweils eine Nut bzw. Feder zur Verbindung mit komplementär ausgebildeten Elementen an benachbarten Bausteinen aufweisen.

Jedoch läßt sich dieser Schrift nicht entnehmen, daß die Nut- und Feder-Führungen an den Stirnenden der quaderförmigen Bausteine einerseits und an Ober- und Unterseiten der Bauseiten andererseits identischen Querschnitt haben sollen, um auf diese Weise zwei Bausteine mit senkrecht zueinander gerichteten Längsachsen miteinander verbinden zu können. Auch weisen die Bausteine des bekannten Bausatzes keinerlei Elemente auf, die eine mechanische Verstellung eines Nachbarbausteines in Längsrichtung der Nutfederführung ermöglichen könnten, wie dies mit der versenkten Zahnstange bei den erfindungsgemäß ausgebildeten Abschnitten des Maschinenbettes der Fall ist.

Durch die Anordnung einer Nut bzw. Feder an beiden Stirnflächen der Abschnitte besteht die Möglichkeit, mehrere derartige Abschnitte in beliebiger Reihenfolge miteinander zu verbinden oder weitere Bausatzelemente an den freien Flächen der Abschnitte des Maschinenbettes anzusetzen.

Um in jeder Kombination der Bausatzelemente eine gute Stand- und Auflagefläche für die jeweilige Werkzeugmaschine zu erhalten, ist es zweckmäßig, wenn das Maschinenbett eine im wesentlichen quaderförmige Gestalt mit rechteckigem Querschnitt besitzt, wobei die Nuten und Federn jeweils in der Mitte zwischen den parallel zu ihnen gerichteten Kanten liegen. Je größer die Symmetrie des Bauelementes ist, umso vielfältiger ist es einzusetzen. Vorzugsweise sind die Abschnitte des Maschinenbettes daher auch identisch ausgebildet.

An den Abschnitten des Maschinenbettes oder an den übrigen Bausatzelementen können Klemmelemente, beispielsweise Klemmschrauben vorgesehen sein, um die miteinander verbundenen Teile in der jeweiligen Stellung zu fixieren.

Die folgende Beschreibung erläutert mit den beigefügten Zeichnungen die Erfindung anhand eines Ausführungsbeispieles des erfindungsgemäßen Bausatzes. Es zeigen :

Figur 1  eine Seitenansicht einer mit dem neuerungsgemäßen Bausatz aufgebauten Drechselbank,

Figur 2  eine Draufsicht auf die in der Figur 1 dargestellte Anordnung,

Figur 3  eine Endansicht der in der Figur 1 dargestellten Anordnung in Richtung des Pfeiles P in Figur 1,

Figur 4  eine Seitenansicht einer mit dem neuerungsgemäßen Bausatz erstellten Ständerbohrmaschine,

Figur 5  eine Frontansicht der Ständerbohrmaschine nach Figur 4,

Figur 6  eine Seitenansicht einer mit dem neuerungsgemäßen Bausatz erstellten Handbohrmaschine,

Figur 7  eine Seitenansicht einer mit dem neuerungsgemäßen Bausatz erstellten Stichsäge und

Figur 8  eine Draufsicht auf die in der Figur 7 dargestellte Stichsäge.

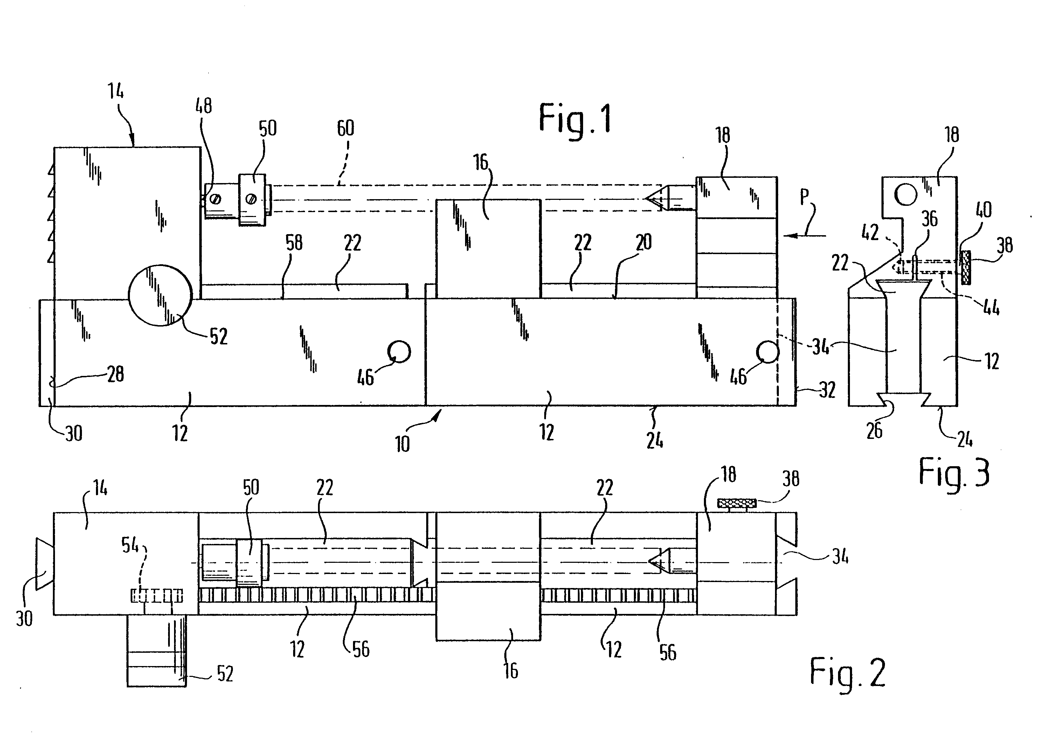

Die in den Figuren 1 bis 3 schematisch dargestellte Drechselbank umfaßt ein allgemein mit 10 bezeichnetes Maschinenbett, bestehend aus zwei identischen Abschnitten 12, sowie einem Spindelstock 14, einer Werkzeugauflage 16 und einem Reitstock 18.

Jeder Abschnitt 12 des Maschinenbettes 10 besteht aus einem langgestreckten Quader, der an seiner einen Längsseite 20 eine parallel zu seiner Längsrichtung in der Mitte zwischen den Längskanten verlaufende Schwalbenschwanzfeder 22 und auf der entgegengesetzten Längsseite 24 eine komplementäre Schwalbenschwanznut 26 aufweist.

In der gleichen Weise weist jeder Abschnitt 12 an seiner einen Stirnfläche 28 eine Schwalbenschwanzfeder 30 und an seiner entgegengesetzten Stirnfläche 32 eine komplementäre Schwalbenschwanznut 34 auf, wobei die Feder 30 und die Nut 34 parallel zu einer durch die Feder 22 und die Nut 26 verlaufenden Ebene gerichtet sind. Die Querschnitte der Federn 22 und 30 bzw. der Nuten 26 und 34 stimmen überein.

Aufgrund dieser Ausbildung können zur Bildung eines langen Maschinenbettes zwei Abschnitte 12 mit ihren Stirnenden aneinandergesetzt werden, indem die Feder 30 des einen Abschnittes 12 in die Nut 34 des anderen Abschnittes 12 eingeschoben wird, wie dies bei der Anordnung gemäß den Figur 1 und 2 der Fall ist. Grundsätzlich können natürlich auch mehrere derartige Abschnitte 12 aneinandergehängt werden, wenn man ein längeres Maschinenbett benötigt.

Spindelstock 14, Werkzeugauflage 16 und Reitstock 18 weisen an ihrer Unterseite jeweils eine zur Feder 22 komplementäre Schwalbenschwanznut auf, wie dies in Figur 3 bei dem Reitstock 18 zu erkennen ist. So können diese Teile auf die Schwalbenschwanzfeder 22 aufgeschoben werden. Das Festlegen der Werkzeugauflage 16 und des Reitstockes 18 sowie anderer Bausatzelemente kann grundsätzlich in der Weise erfolgen, wie dies für den Reitstock in Figur 3 dargestellt ist. Der Reitstock weist an dem Nutengrund seiner Schwalbenschwanznut einen parallel zur Nutlängsrichtung und senkrecht zur Nutengrundfläche verlaufenden Schlitz 36 auf. Senkrecht zur Schlitzebene ist in den Reitstock 18 ein mit einem Rändelkopf 38 versehener Bolzen 40 in den Gewindeabschnitt 42 einer Bohrung 44 eingeschraubt, welche die Ebene des Schlitzes 36 durchsetzt. Durch Anziehen des Bolzens 40 werden die beiderseits des Schlitzes 36 liegenden Teile des Reitstockes 18 zusammengezogen, wodurch der Reitstock 18 auf dem Maschinenbett 10 festgeklemmt wird. Grundsätzlich kann diese Klemmvorrichtung bei allen miteinander zu verbindenden Teilen vorgesehen sein. Die beiden Abschnitte 12 des Maschinenbettes 10 weisen hierzu an ihrem jeweiligen Nutende eine Bohrung 46 auf, in die ein dem Bolzen 40 entsprechender Klemmbolzen eingeschraubt werden kann.

Der Spindelstock 14 enthält einen nicht dargestellten kleinen Elektromotor, der eine Spindel 48 mit einem Spannfutter 50 antreibt. Im Bereich seiner Schwalbenschwanznut ist in dem Spindelstock ein mit einem Rändelkopf 52 drehbares, in der Figur 2 gestrichelt dargestelltes Ritzel 54 gelagert, das mit einer Zahnleiste oder einer Zahnspur 56 in Eingriff steht, welche parallel zur Schwalbenschwanzfeder 22 in der Oberseite 58 jedes Abschnittes 12 ausgebildet ist. Die Zähne der Zahnleiste 56 ragen dabei nicht über die Oberfläche 58 hinaus, so daß sie das Aufschieben anderer Bausatzelemente auf die Schwalbenschwanznut 22 nicht behindern. Durch Drehen des Rändelkopfes 52 bzw. des Ritzels 54 kann der Spindelstock in Längsrichtung des Maschinenbettes verfahren werden. Zwischen dem Spindelstock 14 und dem Reitstock 18 kann ein gestrichelt angedeutetes Werkstück 60 eingespannt und mit Hilfe eines nicht dargestellten Handstahles bearbeitet werden.

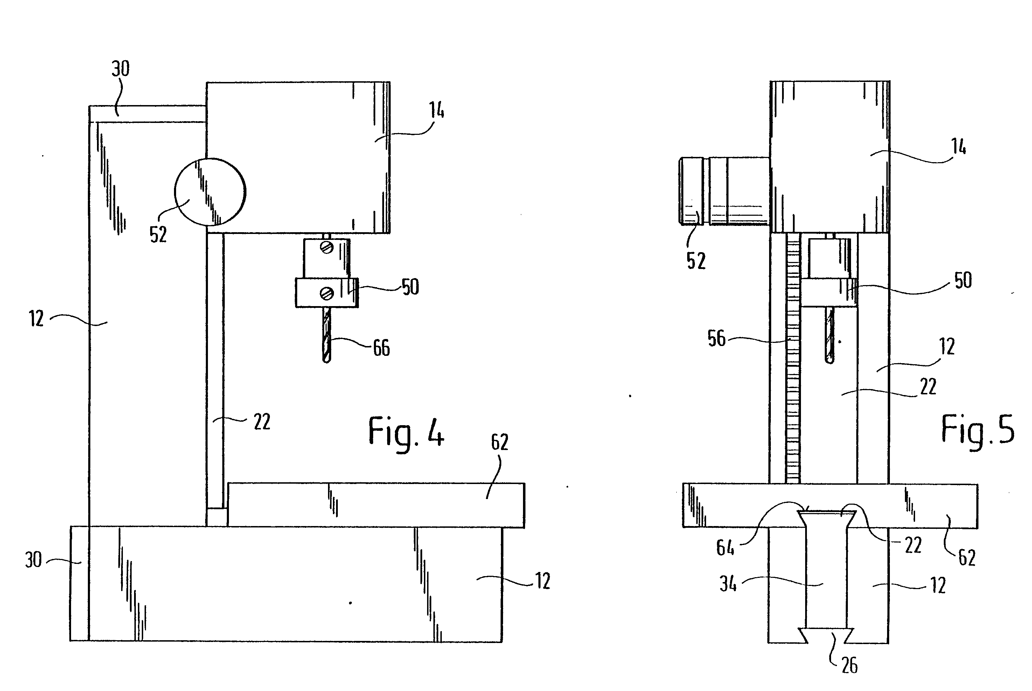

Die Figuren 4 und 5 zeigen eine Ständerbohrmaschine, die aus den beiden anhand der Figuren 1 bis 3 beschriebenen Abschnitten 12 des Maschinenbettes, dem Spindelstock und einem Bohrtisch besteht. Dabei wurde ein Abschnitt 12 des Maschinenbettes als Ständer mit seiner Nut 34 auf die Schwalbenschwanzfeder 22 des anderen Abschnittes 12 geschoben, der als Fuß der Bohrmaschine dient und gleichzeitig den Bohrtisch 62 trägt, der an seiner Unterseite eine zur Schwalbenschwanzfeder 22 komplementäre Schwalbenschwanznut 64 aufweist (Figur 5). Durch Drehen des Rändelkopfes 52 kann der Spindelstock auf und ab gefahren und somit der in dem Spannfutter 50 eingespannte Bohrer 66 in das Material abgesenkt und aus dem Bohrloch wieder herausgehoben werden. Wie man erkennt, läßt sich die Umwandlung der Drechselbank in eine Bohrmaschine auf äußerst einfacher Weise erreichen, indem der Reitstock und die Werkzeugauflage entfernt, die beiden Abschnitte 12 rechtwinklig aneinander gesetzt und ein Bohrtisch auf den einen Abschnitt 12 des Maschinenbettes aufgeschoben wird.

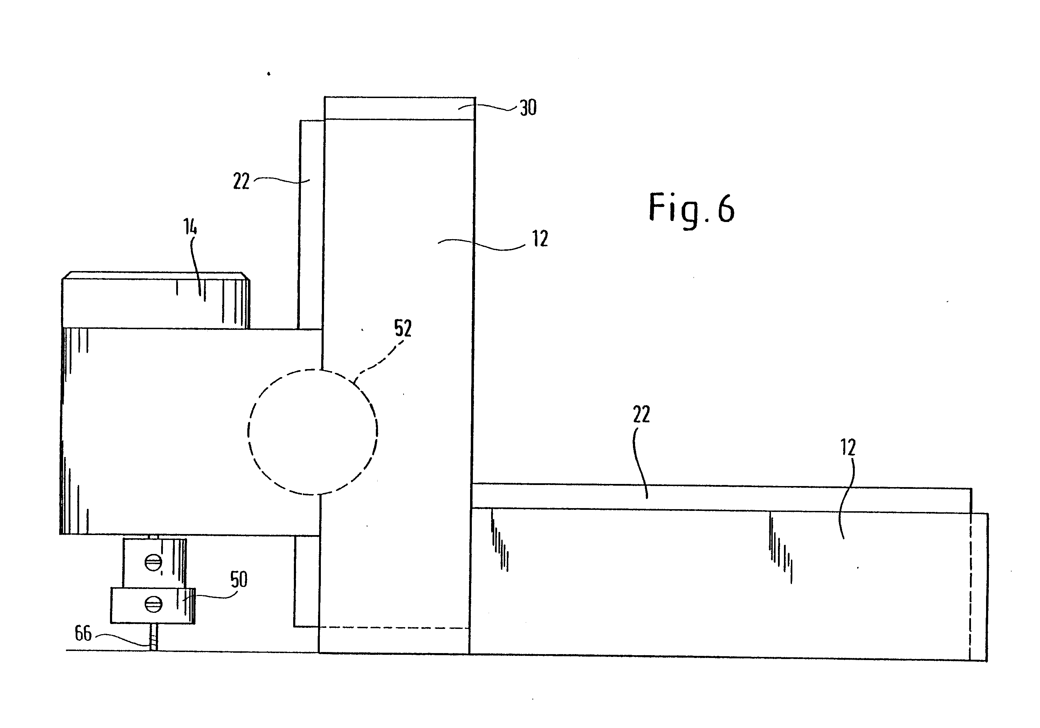

Figur 6 zeigt eine aus zwei Abschnitten 12 des Maschinenbettes und einem Spindelstock aufgebaute Handbohrmaschine. Zu diesem Zweck ist ein Abschnitt 12 mit seiner Schwalbenschwanzfeder 30 in die Bodennut 26 des den Spindelstock 14 tragenden Abschnittes 12 eingeschoben, so daß die beiden Abschnitte 12 wieder rechtwinklig zueinander stehen, wobei die Stirnfläche des den Spindelstock 14 tragenden Abschnittes 12 und die Unterseite 24 des anderen Abschnittes 12 in einer Ebene liegen. Dadurch wird eine solide Auflage zur Abstützung der Bohrmaschine während eines Bohrvorganges geschaffen, wodurch es auch einem Kind möglich ist, die Bohrmaschine während des Bohrvorganges ruhig zu halten.

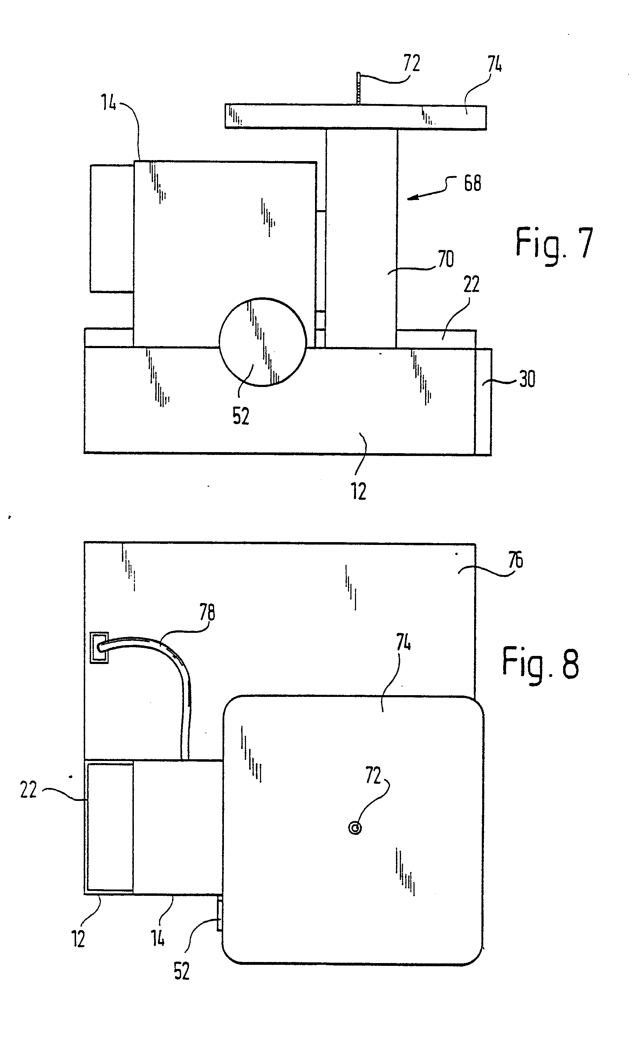

Die Figuren 7 und 8 schließlich zeigen eine Stichsäge, die aus einem Abschnitt 12, dem Spindelstock 14 und einer Sägeeinheit 68 aufgebaut ist. Diese umfaßt ein blockförmiges Fußteil 70, das an seiner Unterseite eine Schwalbenschwanznut aufweist und ebenso wie der Spindelstock 14 auf die Schwalbenschwanzfeder 22 des Abschnittes 12 aufgeschoben ist. In dem Fußteil 70 ist eine mit der Welle des Spindelstockes 14 koppelbare Welle gelagert, die über einen nicht dargestellten Exzenterantrieb ein Sägeblatt 72 auf und ab bewegt. Das Sägeblatt 72 ragt dabei durch einen Sägetisch 74, der auf dem Fußteil 70 ruht.

Zur Erhöhung der Standfestigkeit der Stichsäge ist der Abschnitt 12 mit einem quaderförmigen Batteriekasten 76 auf nicht dargestellte Weise lösbar verbunden, der die zur Speisung des im Spindelstock 14 angeordneten Elektromotors dienenden und mit diesen über ein Kabel 78 verbindbaren Batterien enthält. Die Höhe des Batteriekastens entspricht der eines Abschnittes 12.

Die vorstehenden Ausführungen zeigen, daß mit Hilfe weniger Grundelemente und gegebenenfalls einiger Zusatzelemente aufgrund der neuerungsgemäßen Gestaltung eine Vielzahl von Werkzeugmaschinen aufgebaut werden kann, wobei das Zusammenbauen der einzelnen Werkzeugmaschinen aus den Einzelteilen äußerst einfach ist und auch von Kindern in den ersten Schuljahren bereits ausgeführt werden kann. Trotz der Einfachheit ihres Aufbaus erlauben die aus dem neuerungsgemäßen Bausatz aufgebauten Werkzeugmaschinen eine Vielzahl von Bearbeitungsvorgängen, insbesondere an Holz und Kunststoff. Die Teile des Bausatzes selbst können preiswert aus Kunststoff hergestellt werden, da die aufzunehmenden Kräfte gering sind und keine hohe Präzision der Teile erforderlich ist.

Grundsätzlich können bei den beschriebenen Elementen des Bausatzes jeweils Nut und Feder vertauscht sein, jedoch hat sich die dargestellte Ausführungsform als besonders vorteilhaft erwiesen. Auch wäre es denkbar, daß an den Abschnitten 12 des Maschinenbettes 10 weitere Nuten und Federn gleichen Querschnittes ausgebildet sind, um so die Vielfalt der Kombinationsmöglichkeiten zu erhöhen.

**Patentansprüche**

1. Bausatz zur Erstellung von Werkzeugmaschinen, umfassend eine Mehrzahl von Bausatzelementen mit mindestens einem länglichen Maschinenbett (10) und einem an dem Maschinenbett in dessen Längsrichtung verstellbaren Spindelstock (14) mit einem Antriebsmotor für die Spindel (48), wobei die mit dem Maschinenbett (10) verbindbaren Bausatzelemente (14, 16, 18) mittels einer in Bettlängsrichtung verlaufenden Nut-Feder-Führung (22) am Maschinenbett (10) gehalten sind, dadurch gekennzeichnet, daß das Maschinenbett (10) senkrecht zu seiner Längsrichtung in mindestens zwei Abschnitte (12) unterteilt ist, die senkrecht zu ihrer Längsrichtung gleichen Querschnitt besitzen und die an zwei einander gegenüberliegenden Längsseiten (20, 24) und an ihren Stirnflächen jeweils eine Nut (26, 34) bzw. eine Feder (22, 30) gleichen Querschnitts aufweisen derart, daß die beiden Abschnitte (12) des Maschinenbettes (10) wahlweise in Flucht miteinander oder mit zueinander senkrechten Längsachsen miteinander verbindbar sind und daß die Abschnitte (12) neben ihrer in Längsrichtung verlaufenden Nut oder Feder (22) eine Zahnleiste (56) aufweisen, deren Zähne nicht über die Oberfläche (58) der Abschnitte (12) hinausragen.

2. Bausatz nach Anspruch 1, dadurch gekennzeichnet, daß die Abschnitte (12) des Maschinenbettes (10) jeweils einen rechteckigen Querschnitt aufweisen und daß die Nuten (26, 34) oder Federn (22, 30) jeweils in der Mitte zwischen den parallel zu ihnen gerichteten Kanten der Abschnitte (12) liegen.

3. Bausatz nach einem der Ansprüche 1 oder 2, dadurch gekennzeichnet, daß jeweils mindestens eines von zwei miteinander durch Nut und Feder zu verbindenden Bausatzelementen ein Klemmelement (40) aufweist, mit dessen Hilfe die beiden miteinander verbundenen Teile (18, 12) in einer gewünschten Stellung relativ zueinander fixierbar sind.

4. Bausatz nach einem der Ansprüche 1 bis 3, dadurch gekennzeichnet, daß die Abschnitte (12) des Maschinenbettes (10) identisch ausgebildet sind.

**Claims**

1. Modules for setting up machine tools, comprising a number of module elements having at least one elongate machine bed (10) and, movable thereon lengthwise thereof, a headstock (14) having a motor for driving the spindle (48), the module elements (14, 16, 18) which are connectable to the machine bed (10) being retained thereon by means of a tongue-and-groove guide (22) extending lengthwise of the bed, characterized in that the machine bed (10) is subdivided perpendicularly to its length into at least two parts (12) which both have the same cross-section as one another perpendicularly to their length and which are formed on two opposite longitudinal sides (20, 24) and on their end faces with a respective groove (26, 34) and tongue (22, 30) of the same cross-section, so that the two parts (12) are selectively connectable either in alignment with one another or with their longitudinal axes perpendicular to one another, and the parts (12) have in addition to the lengthwise tonguing and grooving (22) a serrated strip (56) whose teeth do not project beyond the surface (58) of the bed parts (12).

2. Modules according to claim 1, characterized in that the bed parts (12) are each of rectangular cross-section and the grooves (26, 34) or tongues (22, 34) are disposed centrally between those edges of the parts (12) which are parallel to the grooves and tongues.

3. Modules according to claim 1 or 2, characterized in that at least one of any two module elements to be interconnected by tonguing and grooving has a clamping element (40) enabling the two interconnected parts (18, 12) to be located relatively to one another in any desired position.

4. Modules according to any of claims 1 to 3, characterized in that the parts (12) are identical.

## Revendications

1. Jeu de pièces pour la construction de machines-outils comprenant une pluralité d'éléments avec au moins un banc de machine (10) allongé et une poupée (14) de broche montée sur le banc de machine et réglable en position dans le sens longitudinal de ce dernier avec un moteur d'entraînement pour la broche (48), dans lequel les éléments du jeu de pièces (14, 16, 18) combinables avec le banc de machine (10) sont tenus sur ce banc de machine (10) au moyen d'une glissière (22) du type à rainure et languette s'étendant dans le sens longitudinal du banc, caractérisé en ce que le banc de machine (10) est partagé perpendiculairement à son sens longitudinal en au moins deux parties (12) qui présentent perpendiculairement à leur sens longitudinal une même section droite et qui possèdent sur deux côtés longitudinaux opposés (20, 24) et sur leurs faces terminales respectivement une rainure (26, 34) et une languette (22, 30) de mêmes sections droites de telle sorte que les deux parties (12) du banc de machine (10) peuvent être assemblées entre elles au choix dans le prolongement l'une de l'autre ou perpendiculairement l'une à l'autre et que les parties (12) présentent en plus de leur rainure ou languette (22) s'étendant en sens longitudinal une crémaillère (56) dont les dents ne dépassent pas la surface supérieure (58) des parties (12).

2. Jeu de pièces de construction selon la revendication 1, caractérisé en ce que les parties (12) du banc de machine (10) ont l'une et l'autre une section transversale rectangulaire et les rainures (26, 34) ou les languettes (22, 30) se trouvent chacune au milieu entre les bords qui leur sont parallèles des parties (12).

3. Jeu de pièces de construction selon l'une des revendications 1 ou 2, caractérisé en ce qu'au moins l'un des deux éléments de construction devant être assemblés l'un avec l'autre par rainure et languette présente un élément de serrage (40) à l'aide duquel les deux parties (18, 12) reliées l'une à l'autre peuvent être bloquées mutuellement dans une position relative souhaitée.

4. Jeu de pièces de construction selon l'une des revendications 1 à 3 caractérisé en ce que les parties (12) du banc de machine (10) sont identiques.

Fig.1

Fig.2

Fig.3

0 115 086

**Fig. 4**

**Fig. 5**

0 115 086

Fig. 6

Fig. 7

Fig. 8